# EUROPÄISCHE PATENTANMELDUNG

(11) **EP 2 455 299 A1**
(43) Veröffentlichungstag der Anmeldung: **23.05.2012**
(21) Anmeldenummer: 11189806.0
(22) Anmeldetag: 18.11.2011
(51) Int. Cl.: B65D 43/02, B65D 45/32, B29C 45/14

(54) **Behaelter mit abnehmbarem Verschlussdeckel und Verfahren zur Herstellung des Verschlussdeckels**

(30) Priorität: 20.11.2010 DE 102010060694
(71) Anmelder: Ardagh MP Group Netherlands B.V., 7418 AH Deventer (NL)
(72) Erfinder: Kloss, Uwe, 38723 Seesen (DE)
(74) Vertreter: Leonhard, Frank Reimund

(57) **Zusammenfassung**

Die Erfindung betrifft einen Behälter mit einem abnehmbaren Verschlussdeckel (2), der an einem oberen Ende eines Behälterrumpfs (15) gehalten wird. An diesem ist ein Verschlussdeckelsitz (9) angeordnet, den ein Verschlussdeckelrand (19) des Verschlussdeckels (2) mit zumindest 180° umgreift, um den Behälterrumpf (15) abdichtend zu verschließen. Der Verschlussdeckelrand (19) umfasst dabei eine flexible Lippe (20), die einen zu einer Wand des Behälterrumpfs (15) weisenden Vorsprung (18) hat, der zur Fixierung des Verschlussdeckels (2) den Verschlussdeckelsitz (9) untergreift.

Zwischen dem Verschlussdeckelsitz (9) und dem Rand (19) ist eine Kunststoffdichtung (10) aus einer weichelastischen Kunststoffkomponente angeordnet, die ein abgefedertes Aufdrücken des Verschlussdeckels (2) auf den Behälter (4) gestattet.

## Beschreibung

Die Erfindung bezieht sich auf einen Behälter mit abnehmbarem Verschlussdeckel, der an einem oberen Ende eines Behälterrumpfes eingefügt (oder aufgedrückt) gehalten wird, an dem ein Verschlussdeckelsitz, insbesondere als Anrollung, angeordnet ist, welchen Sitz ein Verschlussdeckelrand des Verschlussdeckels zumindest teilweise umgreift, um den Behälterrumpf abdichtend zu verschließen, wobei der Verschlussdeckelrand eine flexible Lippe umfasst, die eine zu dem Behälter hin weisenden Vorsprung hat, der zur Fixierung des Deckels die Anrollung unter- oder hintergreift, je nach Blickrichtung.

Aus der EP 997 385 A2 (Impress) ist ein Behälter mit einem leicht zu öffnenden, abnehmbaren Verschlussdeckel bekannt, der durch klemmende Wirkung in einem oberen Rumpfende des Behälters eingefügt gehalten wird. Am Rumpf ist ein oben liegender Verschlussdeckelsitz, als Bordierung angeordnet, in den der Randbereich des Verschlussdeckels eingreift, um den Verschlussdeckel auf dem Rumpf zu halten. Um den Behälter leichter öffnen zu können, verläuft durch den Verschluss aus Verschlussdeckelrand und Verschlussdeckelsitz am Rumpf ein flexibler aber zugfester Materialstreifen, der auf der Innenseite des Verschlussdeckels durch Klebe-Adhäsionskräfte fixiert ist und außerhalb des Verschlusses hervorsteht. Bei dieser Öffnungshilfe wird eine extra Lasche vorgesehen, um den Deckelrand von der Anrollung des Behälterrumpfes zu lösen.

In EP 411302 B1 (Schmalbach) ist ein Behälter, dort 4, aus Blech (Eimer, Hobbock) mit einem Eindrückdeckel versehen, bei dem der Verformungswiderstand des Verbindungsbereiches durch in radialer Richtung nebeneinander liegende Randeinrollung des Verschlussdeckels und festem spiralförmigem Rollrand des Behälters und einem trapezförmigen Querschnitt des Spannrings außerordentlich erhöht wird. Bei diesem Behälter ein separater Spannring erforderlich, um den Deckelrand auf der Anrollung des Behälterrumpfes zu halten.

Der Erfindung liegt **die Aufgabe zugrunde**, einen Behälter mit abnehmbarem Verschlussdeckel und ein Verfahren zur Herstellung des Verschlussdeckels bereitzustellen, so dass ein Verschlussdeckel geschaffen wird, der sich bei einfacher Herstellung leicht und sicher Öffnen und Schließen lässt.

Zu diesem Zweck ist der erfindungsgemäße Behälter so ausgebildet, dass zwischen dem "Sitz" (bspw. zumindest einer Anrollung) und dem Verschlussdeckelrand (dem "Rand") eine Kunststoffdichtung aus einer oder mehreren weichelastischen Kunststoffkomponente(n) angeordnet ist, die aufgrund ihrer weichelastischen Eigenschaft ein abgefedertes Eindrücken des Verschlussdeckels auf den Behälter (dessen Rand) gestattet. Dabei wird die Kunststoffdichtung nicht nur zum Abdichten des Behälters bzw. zwischen dem Behälterrumpf und dem Behälterdeckel verwendet, sondern auch dazu, das Öffnen und Schließen des Deckels durch nach oben bzw. nach unten Biegen einer flexiblen Lippe zu erleichtern. Durch das elastische Niederdrücken des Deckels auf den Deckelrumpf ist ein Spiel zwischen dem Sitz und dem Vorsprung an der flexiblen Lippe, so dass der Vorsprung sich leicht hinter den Sitz (oder darunter) bewegt oder aus dieser Stellung gelöst werden kann.

Nach einer vorteilhaften Ausgestaltung der Erfindung hat die Lippe im Bereich der Anrollung eine Sollknickstelle, die ermöglicht, dass die Lippe nach oben oder nach unten gekippt werden kann, um den Behälter zu öffnen bzw. zu verschließen. Die Sollknickstelle trägt weiterhin dazu bei, das Aufwärts- und Abwärtsklappen der Lippe zu erleichtern. Daher trägt die Sollknickstelle in vorteilhafter Weise zu einer weiteren Verbesserung des Verschlussdeckels bei. Die Sollknickstelle hat dazu die passende Tiefe und Breite.

Der Behälterdeckel besteht vorzugsweise aus einer Kunststoffkomponente mit einer für den Verschlussdeckel ausreichenden Stabilität. Da für den Behälterdeckel eine Basis-Kunststoffkomponente gewählt werden kann, die unabhängig von dem Material des Dichtringes sein kann, wird eine Ausführung des Deckels selbst und der Kunststoffdichtung mit unterschiedlichen Kunststoffkomponenten erleichtert, die jeweils die spezielle Aufgabe ihres Abschnitts besser erfüllen können.

Nach einer weiteren vorteilhaften Ausgestaltung der Erfindung hat der Behälterdeckel umfänglich verteilte Stabilisierungs-Rippen an seinem Verschlussdeckelspiegel, die an einem Randbereich des Verschlussdeckelspiegels (der Innenraum) von dem Verschlussdeckelspiegel zu dem Verschlussdeckelrand verlaufen. Da der Verschlussdeckel bzw. dessen Randbereich keine Dichtfunktion zu der Anrollung an dem Behälterrumpf hat, ist es in vorteilhafter Weise möglich, den Randbereich des Verschlussdeckelspiegels zu verstärken, indem Rippen zur Stabilisierung angeordnet werden, die sich von dem Randbereich des Verschlussdeckelspiegels (Panel) zu dem Verschlussdeckelrand erstrecken und damit zu einer Versteifung des Deckels beitragen. Nach einer weiteren vorteilhaften Ausgestaltung der Erfindung ist der Behälterdeckel auf seiner Innenseite mit einer Metallfolie, vorzugsweise mit einer Aluminiumfolie, kaschiert, die sich über die Kunststoffdichtung erstreckt. Damit ist in vorteilhafter Weise sichergestellt, dass das Kunststoffmaterial des Deckels nicht mit dem Inhalt des Behälters in Berührung kommen kann, und andererseits wird ein Auslaufen des Behälterinhalts durch die Kunststoffdichtung verhindert.

In vorteilhafter Weise ist die Lippe im unteren Bereich mit einem umlaufenden Sicherungsring versehen ist, wobei zum Öffnen des Behälters der Sicherungsring von der Lippe abzutrennen ist, bevor die Lippe hochgeklappt werden kann. Dadurch wird der erfindungsgemäße Behälterdeckel so ausgestaltet, dass er den betreffenden Normen der UN entspricht, da dann, wenn der Sicherungsring entfernt worden ist, der Deckel nicht mehr in Zustand versetzt werden kann, den er vor der Entfernung des Sicherheitsrings hatte, so dass der Zustand der Originalität des Verschlusses des Deckels sicher festgestellt werden kann.

Wenn der Sicherungsring eine Aufreißlasche aufweist, mit deren Hilfe der Sicherungsring von der Lippe abzutrennen ist, wird in vorteilhafter Weise ermöglicht, den Sicherungsring leicht zu entfernen, wobei es jedoch nicht mehr möglich ist, den Originalzustand durch erneutes Anbringen des Sicherheitsrings wieder herzustellen.

Die Erfindung betrifft ferner ein Verfahren zur Herstellung eines Verschlussdeckels für einen Behälter der oben genannten Art, das dadurch gekennzeichnet ist, dass eine weichelastische Kunststoffkomponente zur Bildung eine Kunststoffdichtung (zwischen dem Behälterdeckel und dem Behälterrand) in eine Spritzgussform eingebracht wird, dass eine Metallfolie in eine Spritzgussform die Metallfolie übergreifend eingelegt wird, und dass eine Basis-Kunststoffkomponente mit einer für den Verschlussdeckel ausreichenden Stabilität über der Metallfolie und in einem Formenhohlraum zur Bildung der Lippe an dem Verschlussdeckelrand aufgebracht wird. Durch dieses Verfahren wird in vorteilhafter Weise erreicht, dass der Behälterdeckel in einem Stück hergestellt werden kann, wobei die Kunststoffdichtung an der Stelle, die für eine sichere Abdichtung des Behälters erforderlich ist, bereits bei der Herstellung fixiert wird.

Ein Ausführungs**beispiel** der Erfindung wird anhand der Zeichnung beschrieben.

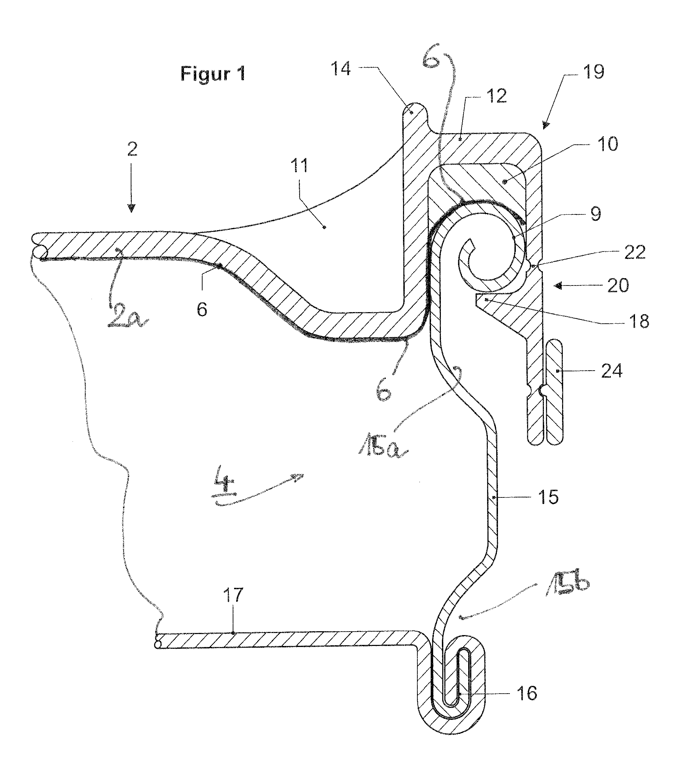

- Fig. 1: zeigt einen Schnitt durch einen Randbereich eines Behälters mit dem Verschlussdeckel gemäß einem Beispiel der Erfindung als Behälter und zur Kennzeichnung der Verfahrensschritte.

Der Verschlussdeckel 2 für einen Behälter 4, beispielsweise eine 99er Dose mit einem Durchmesser von zwischen 90 und 100 mm, ist aus einer ersten Kunststoffkomponenten, die eine angemessene Stabilität des Verschlussdeckels 2 gewährleistet. Der Verschlussdeckel 2 ist an seiner Innenseite mit einer Metallfolie 6, vorzugsweise mit einer Aluminiumfolie, kaschiert. Die Metallfolie 6 dient als Schutz des Kunststoffes gegen aggressive Füllgüter und wird in das Spritzwerkzeug, mit dem der Verschlussdeckel 2 gespritzt wird, eingebracht, sodass die Metallfolie 6 zusammen mit dem Kunststoff des Verschlussdeckels 2 im gleichen Spritzprozess verarbeitet werden.

Als Dichtung des Verschlussdeckels 2 gegen eine Anrollung 9 des Behälters 4 dient eine Kunststoffdichtung 10 aus einer zweiten Kunststoffkomponenten, die weicher als die erste Kunststoff-Komponente ist und die ebenfalls in das Spritzwerkzeug eingebracht wird, sodass auch die Kunststoffdichtung 10 zusammen mit dem Kunststoff des Verschlussdeckels 2 und der Metallfolie 6 im gleichen Spritzprozess verarbeitet werden.

Die Metallfolie 6, erstreckt sich dabei über die Kunststoffdichtung 10 hinweg bzw. reicht bis zwischen den Deckelrand und die Kunststoffdichtung 10.

Um den Behälter 4 im verschlossen Zustand stapelfähig zu machen, ist der Verschlussdeckel 2 mit einer abgeflachten Stapelfläche 12 und einem Zentrieransatz 14 für einen Bodenfalz 16 an einem Boden 17 des gestapelten Behälters 4 versehen.

Der Verschlussdeckel 2 wird mit einem umlaufenden Vorsprung 18 an der Anrollung 9 eines Behälterrumpfes 15 der Dose gehalten. Dieser Vorsprung 18 ist Teil einer flexiblen Lippe 20, die Bestandteil eines Deckelrandes 19 des Verschlussdeckels 2 ist.

Der Verschlussdeckelrand 19 des Verschlussdeckels 2 umgreift beim Verschließen den Verschlussdeckelsitz 9, z.B. als Anrollung, mit zumindest 180°, um den Behälterrumpf 15 abdichtend zu verschließen. Die flexible Lippe fixiert dabei den Verschlussdeckel 2 auf dem Deckelsitz 9, indem der Vorsprung 18 den Sitz untergreift. Die Anrollung 9 ist zumindest eine angerollte Rollung, bevorzugt mit mehr als 270° oder ganz eingerollt als Umrollung mit 360° und mehr.

Über eine Sollknickstelle 22 (z.B. als Einschnürung) der flexiblen Lippe 20 ist es möglich, die Lippe 20 am ganzen Umfang des Verschlussdeckels 2 nach oben zu kippen und damit den Vorsprung 18 von der Anrollung 9 der Dose zu lösen. Der Verschlussdeckel 2 kann dann nach oben entnommen werden.

Zum Wiederverschließen wird der Verschlussdeckel 2 unter Ausnutzung der Elastizität der Kunststoffdichtung 10 wieder auf den Behälter 4 gedrückt, und die Lippe 20 wird am ganzen Umfang wieder nach unten geklappt. Der Vorsprung 18 gleitet dann wieder unter die Anrollung 9.

Als Originalitäts-Sicherung, die Grundlage für eine normgerechte zulassungsfähige Dose gemäß UN ist, ist die Lippe 20 im unteren Bereich mit einem umlaufenden Sicherungsring 24 mit Aufreißlasche versehen werden. Zum Öffnen der Dose muss der Anwender den Sicherungsring 24 mit Hilfe der Aufreißlasche von der Lippe 20 abtrennen, bevor er die Lippe 20 hochklappen kann.

## Patentansprüche

1. **Behälter** mit einem abnehmbaren Verschlussdeckel (2), der an einem oberen Ende eines Behälterrumpfs (15) gehalten wird, an dem ein Verschlussdeckelsitz (9) angeordnet ist, den ein Verschlussdeckelrand (19) des Verschlussdeckels (2) mit zumindest 180° umgreift, um den Behälterrumpf (15) abdichtend zu verschließen, wobei der Verschlussdeckelrand (19) eine flexible Lippe (20) umfasst, die einen zu einer Wand des Behälterrumpfs (15) weisenden Vorsprung (18) hat, der zur Fixierung des Verschlussdeckels (2) den Verschlussdeckelsitz (9) untergreift;
wobei
zwischen dem Verschlussdeckelsitz (9) und dem Verschlussdeckelrand (19) eine Kunststoffdichtung (10) aus einer weichelastischem Kunststoffkomponente angeordnet ist, die ausgestaltet ist, ein abgefedertes Aufdrücken des Verschlussdeckels (2) auf den Behälter (4) zu gestatten oder das abgefederte Aufdrücken des Verschlussdeckelrands (19) auf den Verschlussdeckelsitz (9) ermöglicht.

2. Behälter nach Anspruch 1, wobei die flexible Lippe (20) im Bereich des Verschlussdeckelsitzes (9) eine Sollknickstelle (22) aufweist, deren Tiefe und Breite ausgebildet ist, die Lippe (20) nach oben oder nach unten zu kippen, um den Behälter (4) zu öffnen bzw. zu verschließen.

3. Behälter nach Anspruch 1, wobei der Verschlussdeckel (2) aus einer Basis-Kunststoffkomponente mit einer für den Verschlussdeckel (2) ausreichenden Stabilität besteht.

4. Behälter nach Anspruch 1, wobei der Verschlussdeckel (2) zumindest eine Stabilisierungsrippe (11) aufweist, die in einem Randbereich des Verschlussdeckels (2) von einem Innenabschnitt (2a) des Verschlussdeckels (2) zu dem Verschlussdeckelrand (19) verläuft.

5. Behälter nach Anspruch 1, wobei der Verschlussdeckel (2) auf seiner Innenseite mit einer Metallfolie (6), vorzugsweise mit einer Aluminiumfolie, kaschiert ist, die sich über die Kunststoffdichtung (10) erstreckt.

6. Behälter nach Anspruch 1 oder 2, gekennzeichnet, dass die flexible Lippe (20) im unteren Bereich mit einem umlaufenden Sicherungsring (24) versehen ist, wobei - zum Öffnen des Behälters (4) - der Sicherungsring (24) von der flexiblen Lippe abtrennbar ist, bevor die Lippe (20) hochklappfähig ist.

7. Behälter nach Anspruch 6, wobei der Sicherungsring (24) eine Aufreißlasche aufweist, mit deren Hilfe der Sicherungsring (24) von der flexiblen Lippe (20) abzutrennen ist.

8. Behälter nach Anspruch 1, wobei der Randbereich (19) des Verschlussdeckels (2) auf einer Oberseite (12) abgeflacht ist.

9. Behälter nach Anspruch 8, wobei ein oberer Wandabschnitt (15a) des Rumpfes (15) eingezogen ist und ein unterer Wandabschnitt (15b) ebenso.

10. **Verfahren** zur Herstellung eines Verschlussdeckels (2) für einen Behälter (4), mit folgenden Schritten;
- eine weichelastische Kunststoffkomponente zur Bildung einer Kunststoffdichtung (10) zwischen dem Verschlussdeckel (2) und einem gerollten Behälterrand (9) wird in eine Spritzgussform eingebracht;
- eine Metallfolie (6) wird in eine Spritzgussform die Kunststoffdichtung (10) übergreifend eingelegt;
- eine Basis-Kunststoffkomponente wird mit einer für den Verschlussdeckel (2) ausreichenden Stabilität über der Metallfolie (6) und in einem Formhohlraum zur Bildung des Verschlussdeckelrandes (19) mit einer flexiblen Lippe (20) aufgebracht;
- der Verschlussdeckel (2) wird in der befüllten Spritzgussform geformt.

11. Verfahren nach Anspruch 10, wobei in die flexible Lippe (20) eine Sollknickstelle (22) eingebracht wird, deren Tiefe und Breite ausgebildet ist, die Lippe (20) nach oben oder nach unten zu kippfähig zu machen.

12. Verfahren nach Anspruch 10, wobei die Basis-Kunststoff-Komponente des Verschlussdeckels (2) aus PE oder PP ist.

13. Verfahren nach Anspruch 10, wobei die Metallfolie (6) eine Aluminiumfolie ist, die über die Kunststoffdichtung (10) gelegt wird.

14. Verfahren nach Anspruch 10, wobei der Randbereich (19) des Verschlussdeckels (2) auf einer zum Formhohlraum weisenden Seite (12) abgeflacht ausgebildet wird.

15. Behälter nach Anspruch 1, wobei der Verschlussdeckelsitz als eine Anrollung (9) ausgebildet ist.

16. Behälter nach Anspruch 15, wobei die Anrollung (9) zumindest 270°, bevorzugt mehr als eine ganze Umrollung aufweist.
